# EUROPEAN PATENT SPECIFICATION

(11) **EP 3 722 053 B1**
(45) Date of publication and mention of the grant of the patent: **30.04.2025**
(21) Application number: 17934230.8
(22) Date of filing: 08.12.2017
(51) Int. Cl.: G05B 19/4155, B25J 9/16, G05B 19/4067, B25J 13/00

(54) **CONTROL DEVICE, WORKPIECE OPERATION DEVICE, WORKPIECE OPERATION SYSTEM, AND CONTROL METHOD**
STEUERUNGSVORRICHTUNG, WERKSTÜCKBETRIEBSVORRICHTUNG, WERKSTÜCKBETRIEBSSYSTEM UND STEUERUNGSVERFAHREN
DISPOSITIF DE COMMANDE, DISPOSITIF D'OPÉRATION SUR PIÈCE À USINER, SYSTÈME D'OPÉRATION SUR PIÈCE À USINER ET PROCÉDÉ DE COMMANDE

(43) Date of publication of application: 14.10.2020
(73) Proprietor: Fuji Corporation, Chiryu-shi, Aichi 472-8686 (JP)
(72) Inventor: FUKUMOTO, Ryohei, Chiryu-shi Aichi 472-8686 (JP); FUJITA, Masatoshi, Chiryu-shi Aichi 472-8686 (JP)
(74) Representative: Grünecker Patent- und Rechtsanwälte PartG mbB
(86) International application number: PCT/JP2017/044237
(87) International publication number: WO 2019/111413

(56) References cited:
- EP-A1- 0 368 088
- JP-A- H0 728 520
- JP-A- H07 302 109
- JP-A- H1 011 124
- US-A- 5 043 644
- US-A1- 2013 282 177

## Description

### Technical Field

In the present specification, a control device, a workpiece operation device, a workpiece operation system, and a control method are disclosed.

### Background Art

Conventionally, a workpiece operation device with having a robot arm has been proposed, for example, such that the device memorizes an operation path command in a memory section in a case of an operation section being a backward moving section, and the device executes the operation path command, being memorized in the memory section, in a reverse order when there is an interruption stop input and the operation section is the backward moving section, and then returns to a retraction point (for example, see Patent Literature 1). In this device, the robot arm is to quickly move to the retraction point without interfering with a workpiece.

Patent Application EP 0 368 088 A1 relates to a control ST of an industry robot R.

Patent Application US 5 043 644 A relates to a machining program correction for a numerical control device.

Patent Application US 2013/282177 A1 relates to designation and/or control of a manipulator process for an industrial robot.

### Patent Literature

Patent Literature 1: JP-A-2008-254141

### Summary of the Invention

### Technical Problem

By the way, a robot arm moves a workpiece by performing an operation of gripping the workpiece and an operation of releasing the gripping of the workpiece. In above-described Patent Literature 1, although it is considered that the robot arm moves in a reverse order to the retraction point, a process that cannot be executed in a reverse order is not considered. Therefore, in the reverse feeding process, it is necessary to take the steps such as creating a robot program individually, and a complicated process is required for returning to an operation.

The present disclosure has been made in view of such a problem, and a main object thereof is to provide a control device, a workpiece operation device, a workpiece operation system, and a control method that can more easily realize a reverse feeding process.

### Solution to Problem

In the present disclosure, the following means is adopted to achieve the above-described main object.

The scope of the invention is defined in the appended claims.

A control device of the present disclosure is a control device used in a workpiece working device, including an operation execution section configured to execute a predetermined operation on a workpiece by moving an operation member executing the predetermined operation on the workpiece, the control device comprising: a memory section configured to store an operation order list, including an operation type and an operation position of the operation execution section, which is related to the operation order of the operation type, and an operation type list defined as a pair of an operation type at a time of a forward feeding process and an operation type at a time of a reverse feeding process; and a control section configured to control the operation execution section at the time of the forward feeding process based on an order on the operation order list and the operation type for the forward feeding process on the operation type list, while configured to control the operation execution section at the time of the reverse feeding process based on a reverse order on the operation order list and the operation type for the reverse feeding process in the operation type list.

The control device stores an operation order list, including an operation type and an operation position of the operation execution section, which is related to the operation order of the operation type, and an operation type list which is defined as a pair of the operation types at the time of the forward feeding process and at the time of the reverse feeding process. Further, at the time of the forward feeding process, the control device controls the operation execution section based on an order on the operation order list and an operation type on the operation type list for the forward feeding process, while at the time of the reverse feeding process, the control device controls the operation execution section based on a reverse order on the operation order list and an operation type on the operation type list for the reverse feeding process. For example, in a case of the workpiece operation device being configured to move and place the workpiece, if the reverse feeding process, such as returning to the operation, is simply performed during a period of the workpiece being gripped and moved in the forward feeding process, an operation of moving the workpiece and gripping the workpiece is executed, which turns out some countermeasures being required at the time of the reverse feeding process. In the control device according to the present disclosure, an operator defines an operation order of the operation type in the operation order list, and defines the operation type for the forward feeding process and the operation type for the reverse feeding process in the operation type list in a pairing manner, so that the device can automatically replace and execute the work in the reverse feeding process when returning to the operation. Therefore, in this control device, the reverse feeding process can be more easily performed without preparing independently a complicated process (for example, a program and the like) related to the reverse feeding process.

**In** the control device of the present disclosure, the memory section may store a position list related to recording of an operation position of the operation execution section executed at the time of the forward feeding process, and the control section may execute the reverse feeding process based on the position list when an operation of the operation execution section starts. **In** this control device, since the current position of the operation execution section can be gripped using the position list, the reverse feeding process can be executed more stably.

**In** the control device of the present disclosure for storing the position list, the control section causes the memory section to memorize the operation position of the operation execution section, being executed at the time of the forward feeding process, as operation position information from a recording start position included in the position list, to delete the operation position information when arriving at a recording end position included in the position list, and the control section controls the operation execution section to execute the reverse feeding process from the operation position included in the operation position information if the operation position information is memorized when the operation of the operation execution section starts. **In** this control device, whether to execute the reverse feeding process from the recording start position to the recording end position registered in the position list can be more easily determined according to the presence or absence of the operation position information.

**In** the control device of the present disclosure, the control section may control the operation execution section to execute the reverse feeding process when the operation execution section is stopped due to an error and then performs a return operation. **In** this control device, operation returning can be realized more easily.

**In** the control device of the present disclosure, wherein the operation member is a pick-up member configured to perform a pick-up process of the workpiece, wherein the operation execution section is a pick-up moving section having the pick-up member and configured to move the workpiece, and wherein the memory section stores the operation type list which is defined by including one or more of a pair of pick-up operation and a pick-up release operation of the workpiece, and a pair of a moving operation of the workpiece to a moving target position and a moving operation to the moving target position for one previous operation type. **In** this control device, the reverse feeding process can be executed by automatically replacing the pick-up operation and the moving operation.

A workpiece operation device of the present disclosure includes an operation execution section configured to execute a predetermined operation on a workpiece by moving an operation member configured to execute the predetermined operation on the workpiece, and the control device according to any one of the above configured to control the operation execution section. In the workpiece operation device, similar to the above-described control device, when the operator defines an operation order of the operation type in the operation order list, and defines an operation type at the time of the forward feeding process and an operation type at the reverse feeding process as a pair in the operation type list, in the reverse feeding process such as when returning to the operation, the device can automatically replace the work. Therefore, in this workpiece operation device, the reverse feeding process can be more easily realized without separately preparing a complicated process (for example, a program and the like) related to the reverse feeding process.

In the workpiece operation device of the present disclosure, the operation member is a pick-up member configured to perform a pick-up process of the workpiece, and the operation execution section may be a pick-up moving section having the pick-up member and configured to move the workpiece. For example, in a multi-joint robot or the like as the pick-up moving section, an operation such as teaching may be required even for operation return or the like; however, in the workpiece operation device of the present disclosure, the reverse feeding process can be easily realized without such a work.

A workpiece operation system of the present disclosure includes any one of the multiple workpiece operation devices described above. In this workpiece operation system, the forward feeding process and the reverse feeding process can be easily realized, and for example, interference of the multiple workpiece operation devices can be prevented.

A control method of the present disclosure is a control method used in a workpiece operation device including an operation execution section configured to execute a predetermined operation on a workpiece by moving an operation member configured to execute the predetermined operation on the workpiece, and the method storing, in a memory section, an operation order list, including an operation type and an operation position of the operation execution section, which is related to an operation order of the operation type, and an operation type list defined as a pair of an operation type at a time of a forward feeding process and an operation type at a time of a reverse feeding process, wherein the method includes a step of controlling the operation execution section at the time of the forward feeding process based on an order on the operation order list and the operation type for the forward feeding process defined in the operation type list, and controlling the operation execution section at the time of the reverse feeding process based on a reverse order on the operation order list and the operation type for the reverse feeding process defined in the operation type list..

In this control method, similar to the above-described control device, when the operator defines an operation order of the operation type in the operation order

### Brief Description of Drawings

Fig. 1 is a schematic explanatory diagram illustrating an example of a workpiece operation system 10.
Fig. 2 is a perspective view illustrating an example of a workpiece operation device 20.
Fig. 3 is an explanatory diagram of information memorized in a memory section 43.
Fig. 4 is an explanatory diagram of a list content input screen 50.
Fig. 5 is a flowchart illustrating an example of an operation execution routine.
Fig. 6 is a flowchart illustrating an example of an operation position memory processing routine.
Fig. 7 is an explanatory diagram illustrating an example of operation with respect to a workpiece W.
Fig. 8 is an explanatory diagram illustrating an example of a forward feeding process and a reverse feeding process after stopping halfway.
Fig. 9 is an explanatory diagram illustrating an example of a simulator image displayed on display section 48.

### Description of Embodiments

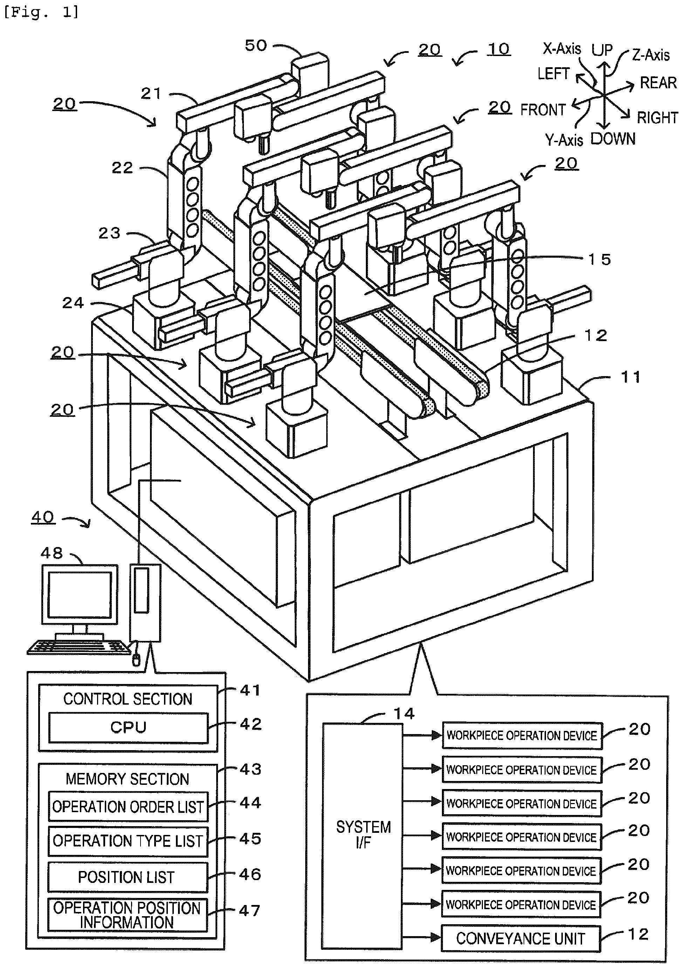

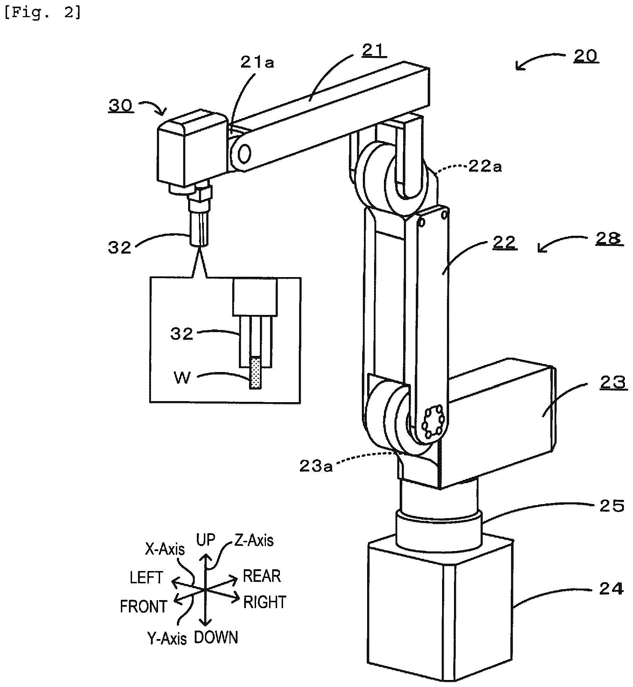

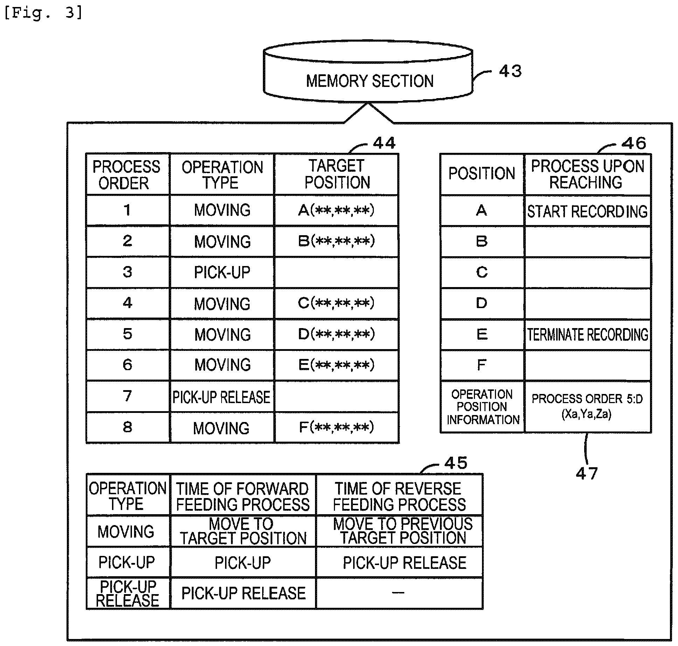

An embodiment of a workpiece operation system 10 disclosed in the present specification will be described below with reference to the drawings. Fig. 1 is a schematic explanatory diagram illustrating an example of workpiece operation system 10. Fig. 2 is a perspective view illustrating an example of workpiece operation device 20. Fig. 3 is an explanatory diagram of operation order list 44, operation type list 45, position list 46, and operation position information 47 memorized in memory section 43. Workpiece operation system 10 includes multiple workpiece operation devices 20 that perform predetermined operation with respect to an operation target object (workpiece W). Workpiece operation system 10 includes one or more workpiece operation devices 20, base 11 on which workpiece operation devices 20 are disposed, conveyance unit 12 that conveys and fixes disposition member 15, on which workpiece W (see Fig. 2) is placed, to an operation region, and system interface (I/F) 14 that inputs an instruction from control device 40. Here, an example will be described in which workpiece operation system 10 performs an operation of moving workpiece W from a supply position to a disposition position (disposition member 15). A left-right direction (X-axis), a front-rear direction (Y-axis) and a vertical direction (Z-axis) of workpiece operation system 10 is as illustrated in Fig. 1. In addition, although the directions are not fixed specific directions since workpiece operation device 20 is movable in all directions, for convenience of description, the directions illustrated in Fig. 2 will be described as the left-right direction (X axis), the front-rear direction (Y axis), and the vertical direction (Z axis) with respect to workpiece operation device 20.

Workpiece operation device 20 is configured as a device for performing a predetermined operation on an operation target object. The operation target object is not particularly limited, and includes, for example, various components such as a mechanical component, an electrical component, an electronic component, and a chemical component as well as food, a biotechnological object, and a biological-related object. Further, the predetermined operation includes, for example, a moving operation of performing pick-up, moving, and arrangement from a supply position to a target position, an assembling operation of assembling components, a working operation of performing working, an applying operation of applying a viscous material, a heating operation of performing heating, a processing operation of performing chemical and/or physical predetermined processing, and an inspection operation of performing inspection. The assembling operation includes, for example, a fastening operation of fastening members such as a screw and a bolt, an insertion operation for a connector, a wiring-related handling operation, a component fitting operation, a member attaching operation, a pressing operation of pressing a workpiece, and the like. Examples of the working operation include a grinding operation, a cutting operation, a deformation operation, a connection operation, a joining operation, and the like. Examples of the viscous material include an adhesive, a solder paste, grease, and the like. The inspection operation includes, for example, an operation of inspecting one or more of the above-described operation results, and may be accompanied by an operation of moving workpiece W.

Workpiece operation device 20 is configured as a multi-joint arm robot, and includes first arm 21, second arm 22, third support portion 23, pedestal portion 24, and end effector 30, as illustrated in Fig. 2. End effector 30 is rotatably disposed at a tip end of first arm 21 via first driving section 21a. First arm 21 is rotatably disposed at a tip end of second arm 22 via second driving section 22a. Second arm 22 is rotatably disposed at a tip end of third support portion 23 via third driving section 23a. Third support portion 23 is rotatably supported by pedestal portion 24 via pedestal driving section 25. The arms and the driving sections constitute operation execution section 28 that performs a picking up and moving operation for workpiece W. End effector 30 picks up workpiece W, and has pick-up member 32. Pick-up member 32 is an operation member for grasping and picking up workpiece W, and is moved by operation execution section 28. Pick-up member 32 may be a suction nozzle for picking up workpiece W by a negative pressure.

Control device 40 is a computer that controls entire workpiece operation device 20 included in workpiece operation system 10. Control device 40 includes control section 41, memory section 43, and display section 48. Control section 41 is configured as a microprocessor centered on CPU 42. Control section 41 outputs drive signals to first driving section 21a, second driving section 22a, third driving section 23a, pedestal driving section 25, end effector 30, and the like. For example, memory section 43 is configured as a large-capacity memory device such as an HDD. As illustrated in Fig. 3, memory section 43 stores operation order list 44, operation type list 45, position list 46, operation position information 47, and the like, which are used for controlling workpiece operation device 20. Display section 48 displays a screen including information on workpiece operation device 20, and is, for example, a liquid crystal display.

Operation order list 44 includes the following information: a processing order, an operation type, and an operation position, related to an operation order of the operation type of workpiece operation device 20. The operation position may be a position of workpiece W or a position of an operation member (pick-up member 32), which can be treated as synonymous although coordinates thereof are different. Here, for convenience of description, the position of pick-up member 32 is mainly described as the operation position. Operation type list 45 includes
information defined as a pair of an operation type at a time of a forward feeding process and an operation type at a time of a reverse feeding process. Position list 46 includes information related to recording of an operation position of operation execution section 28 executed at the time of the forward feeding process. Position list 46 includes a specific target position and recording start and recording end of operation position information 47 as processing executed when pick-up member 32 reaches the target position. Operation position information 47 is information recorded based on position list 46, and is information in which the processing order and position coordinates during an operation are associated with each other. Operation position information 47 is temporary data that is deleted from memory section 43 when pick-up member 32 reaches a position of the recording end of position list 46. Control section 41 is programmed to execute the operation type defined in operation order list 44 in a processing order by using operation contents defined at a time of the forward feeding of operation type list 45. On the other hand, control section 41 is programmed to execute the operation type defined in operation order list 44 in a reverse order of the processing order using operation contents defined at a time of the reverse feeding of operation type list 45 when operation position information 47 is memorized.

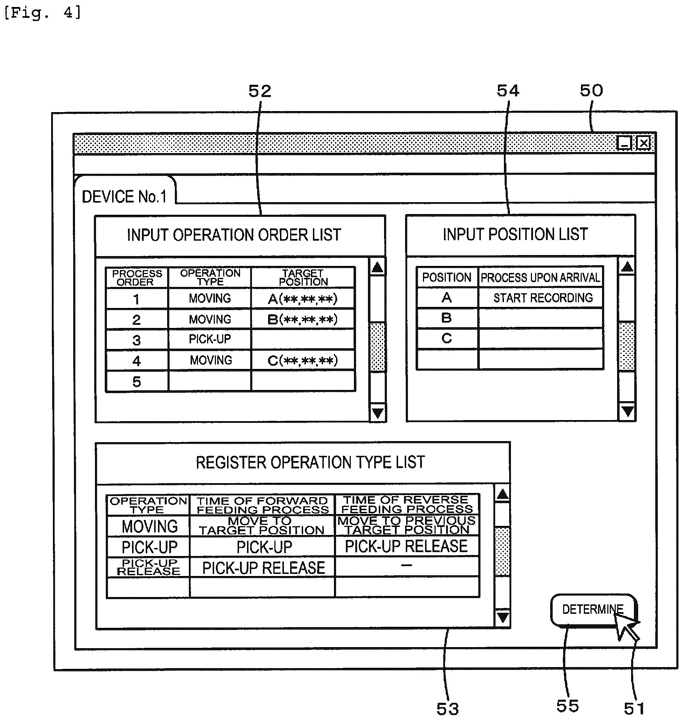

Next, the operation using above-described workpiece operation system 10 will be described. First, a process of inputting contents of operation order list 44, operation type list 45, and position list 46 will be described. Fig. 4 is an explanatory diagram of list content input screen 50 displayed on display section 48 of control device 40. Cursor 51, operation order list input field 52, operation type list registration field 53, position list input field 54, determination key 55, and the like are arranged on list content input screen 50. Cursor 51 selects an input position and various keys, and operates in conjunction with a mouse and a keyboard connected to control device 40. Operation order list input field 52 is a region for inputting information included in operation order list 44, and is a field for inputting information such as a processing order, an operation type (command), and an operation position (X, Y, Z coordinates). Operation type list registration field 53 is a field for registering the operation type at the time of the forward feeding process and the operation type at the time of the reverse feeding process, which are included in operation type list 45, in a paired manner. In the operation type (the command), the operation contents at the time of the forward feeding process are determined in advance, and in this field, after the operation type at the time of the forward feeding process is selected, the operation type at the time of the reverse feeding process corresponding thereto is registered. In Fig. 4, since "pick-up release" is registered at the time of the reverse feeding process of "pick-up", workpiece operation device 20 performs a pick-up release operation at the time of the reverse feeding process; however, for example, when "-" indicating that nothing is executed is registered, a setting is made to execute the reverse feeding process without the pick-up release. Position list input field 54 is a field for inputting a position at which the recording of operation position information 47 is started and a position at which the recording is ended, which are included in position list 46. In position list input field 54, the target position is automatically registered according to the processing order in conjunction with the input contents to operation order list input field 52. In Fig. 4, the recording of operation position information 47 is performed once; however, a setting can be made to provide multiple recording start positions and multiple recording end positions and to record operation position information 47 multiple times. Determination key 55 is a key to be pressed when the input contents are determined. An operator can easily set an operation of workpiece operation device 20 by inputting various pieces of information to list content input screen 50 without using, for example, a teaching pendant.

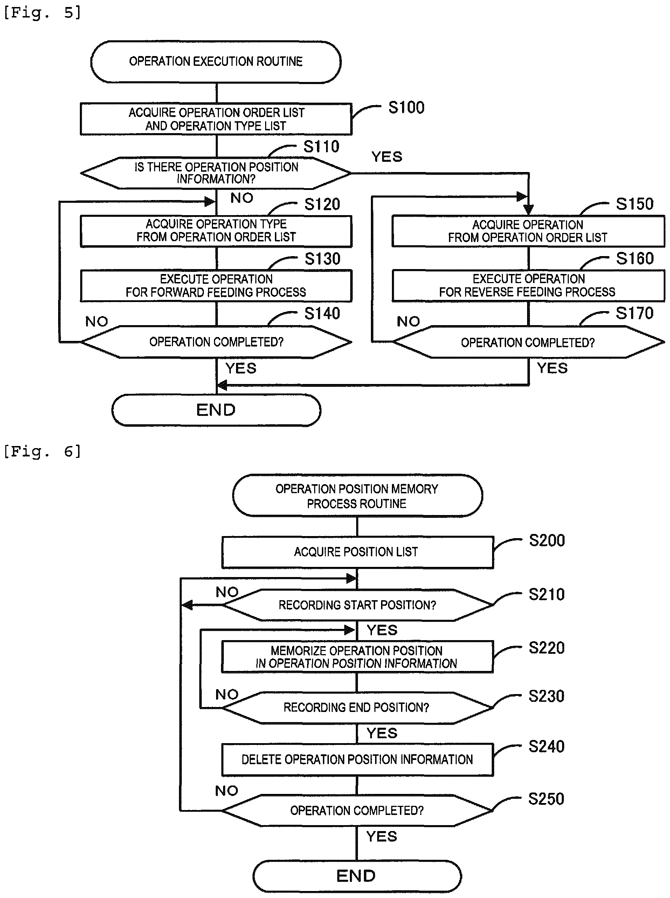

Next, an operation of above-configured workpiece operation system 10 of the present embodiment, particularly, an operation related to the forward feeding process and the reverse feeding process, will be described. Here, a process of arranging and fixing workpiece W to disposition member 15 by workpiece operation device 20 will be described as an example. Fig. 5 is a flowchart illustrating an example of an operation execution routine executed by CPU 42 of control device 40. Fig. 6 is a flowchart illustrating an example of an operation position memory processing routine executed by CPU 42 of control device 40.

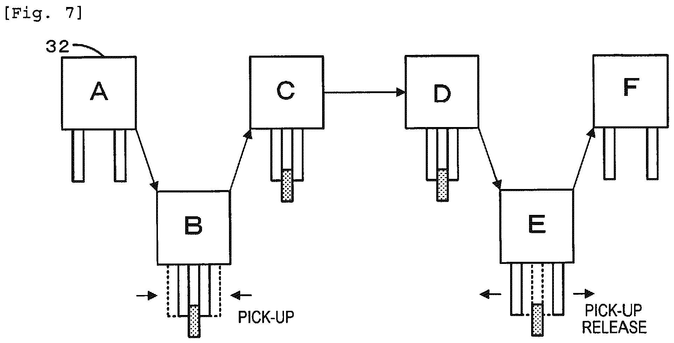

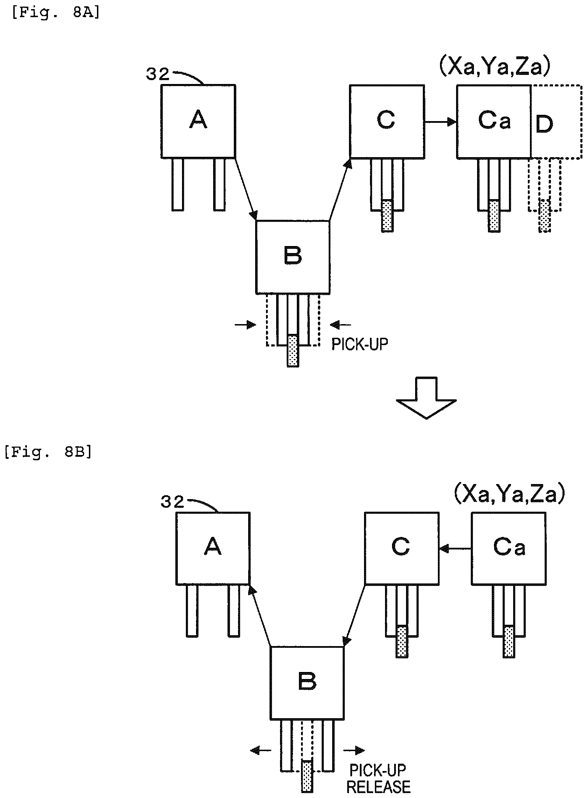

The operation position memory processing routine of Fig. 6 is executed by CPU 42 in parallel with the operation execution routine. Further, Fig. 7 is an explanatory diagram illustrating an example of operation with respect to workpiece W executed by workpiece operation device 20 based on the content of Fig. 3. Fig. 8 is an explanatory diagram illustrating an example of the forward feeding process (Fig. 8A) and the reverse feeding process (Fig. 8B) after stopping halfway. The operation execution routine and the operation position memory processing routine are memorized in memory section 43, and are executed in response to a start instruction by the operator.

First, the operation position memory processing routine of Fig. 6 will be described. When the operation position memory processing routine is started, CPU 42 reads out and acquires position list 46 from memory section 43 (S200), and determines whether pick-up member 32 has reached the recording start position of operation position information 47 based on a progress status of operation order list 44 (S210). When pick-up member 32 does not reach the recording start position, CPU 42 waits as it is. On the other hand, when pick-up member 32 reaches the recording start position, the present processing order and the present operation position are memorized in memory section 43 as operation position information 47 (S220). Next, CPU 42 determines whether pick-up member 32 has reached the recording end position based on the progress status of operation order list 44 (S230). When pick-up member 32 does not reach the recording end position, CPU 42 continues a process of S220, and when pick-up member 32 reaches the recording end position, CPU 42 deletes operation position information 47 from memory section 43 (S240), and determines whether a series of operations is completed (S250). When the series of operations is not completed, CPU 42 executes S210 and subsequent processes, and when the series of operations is completed, CPU 42 ends the routine as it is. As described above, control device 40 memorizes operation position information 47 in memory section 43 during the operation determined by the operator.

Next, the operation execution routine of Fig. 5 will be described. When the operation execution routine is started, CPU 42 reads out and acquires operation order list 44 and operation type list 45 from memory section 43 (S100), and determines whether operation position information 47 is memorized in memory section 43 (S110). When operation position information 47 is not memorized in memory section 43, CPU 42 performs the forward feeding process (S120-S140). In detail, CPU 42 acquires an operation type according to the processing order from operation order list 44 (S120), acquires operation contents corresponding to the acquired operation type from operation type list 45, and causes workpiece operation device 20 to execute the operation (S130). For example, CPU 42 acquires the operation type "moving" in processing order 1 as illustrated in Fig. 3, and causes the workpiece operation device 20 to execute a process of moving pick-up member 32 to target position A (see FIG. 7). Next, CPU 42 determines whether all of the set operations have been completed based on whether the operation has been performed up to the last operation in operation order list 44 (S140), and when the operation has not been completed, executes S120 and subsequent processes. That is, the operation type "moving" in processing order 2 is acquired, and a process of moving pick-up member 32 to target position B is executed by workpiece operation device 20 (see Fig. 7). By repeating such a process, CPU 42 picks up workpiece W at position B, moves positions C to E, releases the pick-up of workpiece W at position E, and moves pick-up member 32 to position F. On the other hand, when the operation is completed in S140, the routine is terminated as it is.

On the other hand, in S110, when operation position information 47 is memorized in memory section 43, CPU 42 determines that the process returns to the operation after being interrupted in the middle of the previous series of operations, and executes the reverse feeding process (S150-S170). In detail, CPU 42 uses coordinates in a processing order included in operation position information 47 as start coordinates, and acquires the operation type according to a reverse processing order of operation order list 44 (S150), and acquires, from operation type list 45, the operation contents corresponding to the acquired operation type at the time of the reverse feeding process, and causes workpiece operation device 20 to execute the operation (S160). Next, CPU 42 determines whether all of the set operations have been completed based on whether the first operation in operation order list 44 has been executed (S170), and executes S150 and subsequent processes when the operation has not been completed. For example, as illustrated in Fig. 8A, an example will be described in which the operation is interrupted while moving to position D in processing order 5 (see Fig. 3). A reason for the interruption of the operation includes, for example, a case where the operator operates an emergency stop key, a case where a sensor or the like detects infiltration of an object such as the operator to an operation region, and the like. In control device 40, operation position information 47 is temporarily memorized between the recording start position and the recording end position based on position list 46. Therefore, operation position information 47 is not memorized in memory section 43 except the time of the interruption. Therefore, at a time of starting the operation, CPU 42 can determine whether a process is the reverse feeding process after the interruption is released, based on the presence or absence of operation position information 47. In this reverse feeding process, for example, CPU 42 acquires the operation type "move to the previous target position" in processing order 5 from operation type list 45 based on operation position information 47, and causes workpiece operation device 20 to execute a process of moving pick-up member 32 from starting coordinates (Xa, Ya, Xa) to previous target position C (see Fig. 8B). By repeating such a process, CPU 42 moves pick-up member 32 from position C to position B, releases pick-up of workpiece W at position B, and moves pick-up member 32 to position A. On the other hand, when the operation is completed in S170, the routine is terminated as it is. In this way, control device 40 can easily switch and execute the forward feeding process and the reverse feeding process after the operation is interrupted, using operation order list 44, operation type list 45, position list 46, and operation position information 47.

Here, a correspondence relationship between the constituent elements of the present embodiment and the constituent elements of the present invention will be clarified. Pick-up member 32 of the present embodiment corresponds to an operation member of the present disclosure, operation execution section 28 corresponds to an operation execution section, memory section 43 corresponds to a memory section, and control section 41 corresponds to a control section. Further, operation order list 44 corresponds to an operation order list, operation type list 45 corresponds to an operation type list, position list 46 corresponds to a position list, and operation position information 47 corresponds to operation position information. Further, control device 40 corresponds to a control device, workpiece operation device 20 corresponds to a workpiece operation device, and workpiece operation system 10 corresponds to a workpiece operation system. In the present embodiment, an example of a control method of the present disclosure is also clarified by explaining an operation of control device 40.

In above-described control device 40 of the present embodiment, operation order list 44 related to an operation order of the operation type including the operation type and the operation position of operation execution section 28, operation type list 45 defined by pairing the operation type at the time of the forward feeding process and the operation type at the time of the reverse feeding process, position list 46 related to recording of an operation position of operation execution section 28 executed at the time of the forward feeding process, and operation position information 47 are memorized in memory section 43. Further, control device 40 controls, during the forward feeding process, the operation execution section 28 based on an order on the operation order list and the operation type on the operation type list at the time of the forward feeding process, and controls, during the reverse feeding process, operation execution section 28 based on operation position information 47, a reverse order of operation order list 44, and the operation type on the operation type list 45 at the time of the reverse feeding process. For example, when workpiece operation device 20 moves and places workpiece W, if gripping of workpiece W and moving of workpiece W are executed in the forward feeding process, when the reverse feeding process is simply executed if returning to the operation, an operation of moving the workpiece and gripping the workpiece is executed, so that some countermeasures are required in the reverse feeding process. In control device 40, when the operator defines an operation order of the operation type in operation order list 44, and defines the operation type at the time of the forward feeding process and the operation type at the time of the reverse feeding process in operation type list 45, in the reverse feeding process when the process returns to the operation, the device can automatically replace and execute the work. In control device 40, it is not necessary to separately prepare a complicated countermeasure (for example, a program or the like) related to the reverse feeding process, and the reverse feeding process can be realized more easily. Further, since control device 40 can grasp a current position of operation execution section 28 by using position list 46, the reverse feeding process can be executed more reliably. Further, in control device 40, whether the reverse feeding process is executed between the recording start position and the recording end position registered in position list 46 can be easily determined based on the presence or absence of operation position information 47 deleted when a series of operations are completed.

Further, since control device 40 executes the reverse feeding process when operation execution section 28 returns to the operation after an error stop, the operation return can be realized more easily. Further, operation execution section 28 has pick-up member 32 and moves the workpiece W, and memory section 43 stores operation type list 45 defined to include at least one of a pair of a pick-up operation of workpiece W and a pick-up release operation of workpiece W and a pair of a moving operation of the workpiece to the moving target position and a moving operation of one previous operation type to the moving target position. Control device 40 can execute the reverse feeding process by automatically replacing the pick-up operation and the moving operation.

Further, workpiece operation device 20 includes operation execution section 28 configured to move an operation member for executing a predetermined operation with respect to workpiece W and to execute the predetermined operation with respect to workpiece W, and above-described control device 40 configured to control operation execution section 28. **In** workpiece operation device 20, similarly to above-described control device 40, the reverse feeding process can be more easily realized without separately preparing a complicated countermeasure related to the reverse feeding process. Further, operation execution section 28 is a multi-joint robot having pick-up member 32 and configured to move workpiece W. For example, in the multi-joint robot, although the operation such as teaching may be required for returning to the operation, workpiece operation device 20 can easily realize the reverse feeding process without such a work.

Further, workpiece operation system 10 includes above-described multiple workpiece operation devices 20. In workpiece operation system 10, since workpiece operation device 20 can easily realize the forward feeding process and the reverse feeding process, and the reverse feeding process can be reliably executed by each workpiece operation device 20, interference between multiple workpiece operation devices 20 and the like can be prevented.

It is obvious that the present disclosure is not limited to above-described embodiments at all, and can be realized various aspects as long as the modes belong to the technical scope of the present disclosure.

For example, in the above-described embodiment, the forward feeding process or the reverse feeding process is determined based on the presence or absence of operation position information 47; however, the present invention is not particularly limited thereto. At a time of error stop, information (for example, a flag) to that effect and the like may be stored. The same effect as that of the above-described embodiment can be obtained even by this control device.

In the above-described embodiment, workpiece operation device 20 is mainly described as performing an operation of moving the workpiece W; however, the present invention is not limited thereto. Workpiece operation device 20 may execute various operations as long as the operations move an operation member configured to perform a predetermined operation on workpiece W. For example, it has been described that workpiece operation device 20 moves from the supply position to the disposition position; however, workpiece W may move from the supply position to an inspection position and, then moves to a sorting position. Further, workpiece operation device 20 may perform one or more operations on one or more workpieces W. For example, workpiece operation device 20 may perform an operation of picking up and moving a bolt as workpiece W and an assembling operation of assembling the same to a main body as another workpiece W, and then execute an operation of inserting a washer as workpiece W into the bolt and a fastening operation of fastening a nut as workpiece W. At this time, CPU 42 may store one or more pieces of operation position information 47 with respect to each work. In control device 40, since operation order list 44, operation type list 45, position list 46, and the like are used, a setting for executing multiple workpieces and multiple kinds of operations can be performed more easily.

In the above-described embodiment, operation type list 45 includes information in which "pick-up" and "pick-up release" are paired. For example, in the reverse feeding process after the error stop, workpiece W picked up by pick-up member 32 may be dropped or may be removed by the operator at the time of the error stop. In the above embodiment, a process of releasing pick-up of workpiece W at the supply position and returning workpiece W is performed; however, various countermeasures such as pick-up to an initial position and returning can be considered. In operation type list 45, accordingly, the reverse feeding process may be registered according to the production.

In above-described embodiment, operation execution section 28 has been described as a multi-joint robot; however, the present invention is not particularly limited thereto. Any structure may be used as long as the structure performs the forward feeding process and the reverse feeding process on the operation member, and for example, the structure may not have multiple joints or may not be provided with an arm.

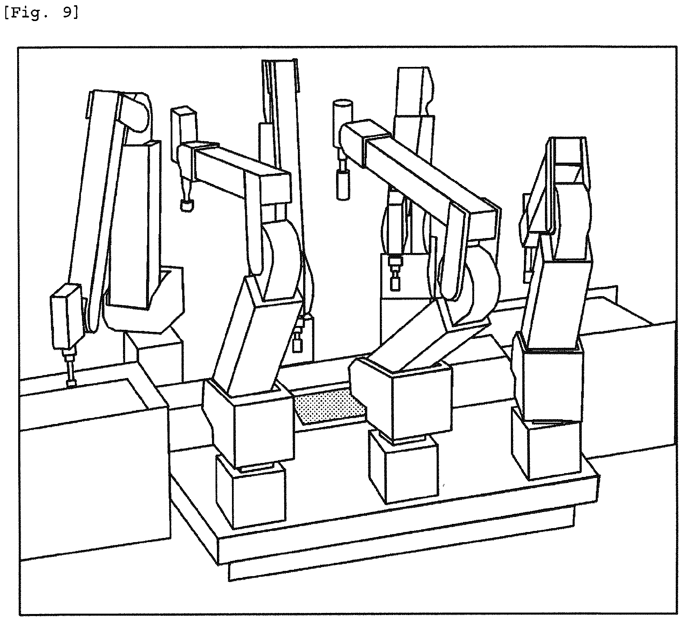

In the above-described embodiment, control device 40 has been described as controlling operation execution section 28 of workpiece operation device 20; however, the present invention is not particularly limited thereto. For example, control device 40 may control a simulator configured to operate the operation execution section of electronic data in the reverse feeding process set offline. That is, the present disclosure may be realized as a control method executed by control device 40. Fig. 9 is an explanatory diagram illustrating an example of a simulator image displayed on display section 48. The simulator image is an image generated by a 3D-CAD operation simulator program. In control device 40, it is possible to identify, on a screen, a return operation from the error stop at a predetermined timing before workpiece operation device 20 is actually worked.

In the above-described embodiment, control device 40 has been described as a computer connected to the outside of workpiece operation device 20; however, the present invention is not particularly limited thereto. For example, a controller provided in workpiece operation device 20 may be used as control device 40.

### Industrial applicability

The control device, the workpiece operation device, the workpiece operation system, and control method disclosed in the present specification can be used in a technical field of a device configured to perform a predetermined operation on a workpiece.

### Reference Signs List

10 Workpiece operation system, 11 Base, 12 Conveyance unit, 14 System interface, 15 Disposition member, 20 Workpiece operation device, 21 First arm, 21a First driving section, 22 Second arm, 22a Second driving section, 23 Third support portion, 23a Third driving section, 24 Pedestal portion, 25 Pedestal driving section, 28 Operation execution section, 30 End effector, 32 Pick-up member, 40 Control device, 41 Control section, 42 CPU, 43 Memory section, 44 Operation order list, 45 Operation type list, 46 Position list, 47 Operation position information, 48 Display section, 50 List content input screen, 51 Cursor, 52 Operation order list input field, 53 Operation type list registration field, 54 Position list input field, 55 Determination key, W Workpiece.

## Claims

1. A workpiece operation device (20) comprising:
an operation execution section (28) configured to execute a predetermined operation on a workpiece (W) by moving an operation member (32) configured to execute the predetermined operation on the workpiece; and
a control device (40) configured to control the operation execution section,
wherein the control device comprises:
a memory section (43) configured to store:
- an operation order list (44), including operation orders, each operation order comprising a processing order, an operation type being one of moving, pick-up and pick-up release, and an operation position of the operation member (32), the operation order list (44) including at least one operation order of the operation type moving and at least one operation order of the operation type pick-up release,
- a position list (46) including information related to recording of the operation position of the operation member (32) executed at the time of a forward feeding process, and
- an operation type list (45) defined as a pair of an operation type at a time of the forward feeding process and an operation type at a time of a reverse feeding process, , wherein the operation type list (45) comprises the following pairs:
• the operation type at a time of the forward feeding process being moving to a target position and the operation type at a time of the reverse feeding process being moving to a previous target position,
• the operation type at a time of the forward feeding process being pick-up and the operation type at a time of the reverse feeding process being pick-up release, and
• the operation type at a time of the forward feeding process being pick-up release and the operation type at a time of the reverse feeding process indicating non-execution; and
a control section (41) configured to:
- control the operation execution section at the time of the forward feeding process to execute the operation type for the forward feeding process in the operation type list (45) in the processing order, and
- control the operation execution section at the time of the reverse feeding process, based on the position list when an operation of the operation execution section starts, so as to execute the operation type for the reverse feeding process in the operation type list in a reversed order of said processing order.

2. The workpiece operation device according to claim 1, wherein
the control section is configured to cause the memory section
- to memorize the operation position of the operation execution section, being executed at the time of the forward feeding process, as operation position information (47) from a recording start position included in the position list,
- to delete the operation position information when arriving at a recording end position included in the position list, and
the control section is further configured to control the operation execution section to execute the reverse feeding process from the operation position included in the operation position information if the operation position information is memorized when the operation of the operation execution section starts.

3. The workpiece operation device according to any one of claims 1 to 2, wherein
the control section is configured to control the operation execution section to execute the reverse feeding process when the operation execution section performs a return operation after being stopped due to an error.

4. The workpiece operation device according to any one of claims 1 to 3, wherein
the operation member is a pick-up member (32) configured to perform a pick-up process of the workpiece,
wherein the operation execution section is a pick-up moving section configured to have the pick-up member and to move the workpiece, and
wherein the memory section is configured to store the operation type list which is defined by including one or more of a pair of pick-up operation and a pick-up release operation of the workpiece, and a pair of a moving operation of the workpiece to a moving target position and a moving operation to the moving target position for one previous operation type.

5. A workpiece operation system (10) comprising multiple workpiece operation devices (20) according to claims 1 to 4.

6. A control method used in a workpiece operation device (20), comprising the steps of:
acquiring from a memory section (43):
- an operation order list (44), including operation orders, each operation order comprising a processing order, an operation type being one of moving, pick-up, and pick-up release, and an operation position of an operation member (32), the operation order list (44) including at least one operation order of the operation type moving and at least one operation order of the operation type pick-up release,
- a position list (46) including information related to recording of an operation position of an operation member executed at the time of a forward feeding process, and
- an operation type list (45) defined as a pair of an operation type at a time of the forward feeding process and an operation type at a time of a reverse feeding process, , wherein
the operation type list (45) comprises the following pairs:
• the operation type at a time of the forward feeding process being moving to a target position and the operation type at a time of the reverse feeding process being moving to a previous target position,
• the operation type at a time of the forward feeding process being pick-up and the operation type at a time of the reverse feeding process being pick-up release, and
• the operation type at a time of the forward feeding process being pick-up release and the operation type at a time of the reverse feeding process indicating non-execution,
controlling (S130) an operation execution section of the workpiece operation device at the time of the forward feeding process to execute the operation type for the forward feeding process in the operation type list (45) in the processing order, and
controlling (S160) the operation execution section of the workpiece operation device at the time of the reverse feeding process, based on the position list when an operation of the operation execution section starts, so as to execute the operation type for the reverse feeding process in the operation type list in a reversed order of said processing order.

## Patentansprüche

1. Werkstückbetriebsvorrichtung (20), aufweisend:
einen Betriebsausführungsabschnitt (28), der so konfiguriert ist, dass er einen vorbestimmten Betrieb an einem Werkstück (W) durch Bewegen eines Betriebselements (32) ausführt, das so konfiguriert ist, dass es den vorbestimmten Betrieb an dem Werkstück ausführt; und
eine Steuervorrichtung (40), die so konfiguriert ist, dass sie den Betriebsausführungsabschnitt steuert,
wobei die Steuervorrichtung aufweist:
einen Speicherabschnitt (43), der so konfiguriert ist, dass er Folgendes speichert:
- eine Betriebsauftragsliste (44), die Betriebsaufträge enthält, wobei jeder Betriebsauftrag einen Verarbeitungsauftrag, einen Betriebstyp der einer von Bewegen, Aufnehmen und Aufnehmen-Freigeben ist, und eine Betriebsposition des Betriebselements (32) umfasst, wobei die Betriebsauftragsliste (44) mindestens einen Betriebsauftrag des Betriebstyps Bewegen und mindestens einen Betriebsauftrag des Betriebstyps Aufnehmen-Freigeben enthält,
- eine Positionsliste (46), die Informationen enthält, die sich auf die Aufzeichnung der Betriebsposition des Betriebselements (32) beziehen, die zum Zeitpunkt eines Vorwärtszuführprozesses ausgeführt wird, und
- eine Betriebstypliste (45), die als ein Paar eines Betriebstyps zum Zeitpunkt des Vorwärtszuführprozesses und eines Betriebstyps zum Zeitpunkt eines Rückwärtszuführprozesses definiert ist, wobei
- die Betriebstypliste (45) die folgenden Paare umfasst:
- den Betriebstyp zu einem Zeitpunkt des Vorwärtszuführprozesses, der eine Bewegung zu einer Zielposition ist, und den Betriebstyp zu einem Zeitpunkt des Rückwärtszuführprozesses, der eine Bewegung zu einer vorherigen Zielposition ist,
- den Betriebstyp zu einem Zeitpunkt des Vorwärtszuführprozesses, der eine Aufnahme ist, und den Betriebstyp zu einem Zeitpunkt des Rückwärtszuführprozesses, der eine Aufnahmefreigabe ist, und
- den Betriebstyp zu einem Zeitpunkt des Vorwärtszuführprozesses, der eine Aufnahmefreigabe ist, und den Betriebstyp zu einem Zeitpunkt des Rückwärtszuführprozesses, der eine Nichtausführung anzeigt; und
einen Steuerabschnitt (41), der konfiguriert ist um:
- den Betriebsausführungsabschnitt zum Zeitpunkt des Vorwärtszuführprozesses zu steuern, um den Betriebstyp für den Vorwärtszuführungsprozess in der Betriebstypliste (45) in der Verarbeitungsreihenfolge auszuführen, und
- den Betriebsausführungsabschnitt zum Zeitpunkt des Rückwärtszuführprozesses basierend auf der Positionsliste zu steuern, wenn ein Betrieb des Betriebsausführungsabschnitts beginnt, um den Betriebstyp für den Rückwärtszuführprozesses in der Betriebstypliste in einer umgekehrten Reihenfolge der Verarbeitungsreihenfolge auszuführen.

2. Werkstückbetriebsvorrichtung nach Anspruch 1, wobei
der Steuerabschnitt so konfiguriert ist, dass er den Speicherabschnitt veranlasst,
- die Betriebsposition des Betriebsausführungsabschnitts, die zum Zeitpunkt des Vorwärtszuführprozesses ausgeführt wird, als Betriebspositionsinformation (47) von einer in der Positionsliste enthaltenen Aufzeichnungsstartposition zu speichern,
- die Betriebspositionsinformationen zu löschen, wenn eine in der Positionsliste enthaltene Aufzeichnungsendposition erreicht wird, und
der Steuerabschnitt ferner so konfiguriert ist, dass er den Betriebsausführungsabschnitt steuert, um den Rückwärtszuführprozess von der in den Betriebspositionsinformationen enthaltenen Betriebsposition aus auszuführen, wenn die Betriebspositionsinformationen gespeichert werden, wenn der Betrieb des Betriebsausführungsabschnitts beginnt.

3. Werkstückbetriebsvorrichtung nach einem der Ansprüche 1 bis 2, wobei der Steuerabschnitt so konfiguriert ist, dass er den Betriebsausführungsabschnitt so steuert, dass er den Rückwärtszuführprozess ausführt, wenn der Betriebsausführungsabschnitt einen Rücklaufvorgang durchführt, nachdem er aufgrund eines Fehlers angehalten wurde.

4. Werkstückbetriebsvorrichtung nach einem der Ansprüche 1 bis 3, wobei
das Betriebselement ein Aufnahmeelement (32) ist, das so konfiguriert ist, dass es einen Aufnahmevorgang des Werkstücks durchführt,
wobei der Betriebsausführungsabschnitt ein Aufnahmebewegungsabschnitt ist, der so konfiguriert ist, dass er das Aufnahmeelement hat und das Werkstück bewegt, und
wobei der Speicherabschnitt so konfiguriert ist, dass er die Betriebstypliste speichert, die dadurch definiert ist, dass sie ein oder mehrere Paare aus einem Aufnahmebetrieb und einem Aufnahmefreigabebetrieb des Werkstücks und ein Paar aus einem Bewegungsbetrieb des Werkstücks zu einer Bewegungszielposition und einem Bewegungsbetrieb zu der Bewegungszielposition für einen vorherigen Betriebstyp enthält.

5. Werkstückbetriebssystem (10) mit mehreren Werkstückbetriebsvorrichtungen (20) nach einem der Ansprüche 1 bis 4.

6. Steuerungsverfahren, das in einer Werkstückbetriebsvorrichtung (20) verwendet wird, mit den folgenden Schritten:
Erfassen aus einem Speicherabschnitt (43):
- eine Betriebsauftragsliste (44), die Betriebsaufträge enthält, wobei jeder Betriebsauftrag einen Verarbeitungsauftrag, einen Betriebstyp der einer von Bewegen, Aufnehmen und Aufnehmen-Freigeben ist, und eine Betriebsposition eines Betriebselements (32) umfasst, wobei die Betriebsauftragsliste (44) mindestens einen Betriebsauftrag des Betriebstyps Bewegen und mindestens einen Betriebsauftrag des Betriebstyps Aufnehmen-Freigeben enthält,
- eine Positionsliste (46), die Informationen enthält, die sich auf die Aufzeichnung einer Betriebsposition eines Betriebselements beziehen, das zum Zeitpunkt eines Vorwärtszuführprozesses ausgeführt wird, und
- eine Betriebstypliste (45), die als ein Paar eines Betriebstyps zum Zeitpunkt des Vorwärtszuführprozesses und eines Betriebstyps zum Zeitpunkt eines Rückwärtszuführprozesses definiert ist, wobei die Betriebstypliste (45) die folgenden Paare umfasst:
- den Betriebstyp zu einem Zeitpunkt des Vorwärtszuführprozesses, der eine Bewegung zu einer Zielposition ist, und den Betriebstyp zu einem Zeitpunkt des Rückwärtszuführprozesses, der eine Bewegung zu einer vorherigen Zielposition ist,
- den Betriebstyp zu einem Zeitpunkt des Vorwärtszuführprozesses, der eine Aufnahme ist, und den Betriebstyp zu einem Zeitpunkt des Rückwärtszuführprozesses, der eine Aufnahmefreigabe ist, und
- den Betriebstyp zu einem Zeitpunkt des Vorwärtszuführprozesses, der eine Aufnahmefreigabe ist, und den Betriebstyp zu einem Zeitpunkt des Rückwärtszuführprozesses, der eine Nichtausführung anzeigt,
Steuern (S130) eines Betriebsausführungsabschnitts der Werkstückbetriebsvorrichtung zum Zeitpunkt des Vorwärtszuführprozesses, um den Betriebstyp für den Vorwärtszuführprozess in der Betriebstypliste (45) in der Verarbeitungsreihenfolge auszuführen, und
Steuern (S160) des Betriebsausführungsabschnitts der Werkstückbetriebsvorrichtung zum Zeitpunkt des Rückwärtszuführprozesses, basierend auf der Positionsliste, wenn ein Betrieb des Betriebsausführungsabschnitts beginnt, um den Betriebstyp für den Rückwärtszuführprozesses in der Betriebstypliste in einer umgekehrten Reihenfolge der Verarbeitungsreihenfolge auszuführen.

## Revendications

1. Dispositif d'opération sur pièce à usiner (20) comprenant :
une section d'exécution d'opération (28) configurée pour exécuter une opération prédéterminée sur une pièce à usiner (W) en déplaçant un organe d'opération (32) configuré pour exécuter l'opération prédéterminée sur la pièce à usiner ; et
un dispositif de commande (40) configuré pour commander la section d'exécution d'opération,
dans lequel le dispositif de commande comprend :
une section de mémoire (43) configurée pour stocker :
- une liste d'ordres d'opération (44), comportant des ordres d'opération, chaque ordre d'opération comprenant un ordre de traitement, un type d'opération qui est l'un parmi un déplacement, une saisie et une libération de saisie, et une position d'opération de l'organe d'opération (32), la liste d'ordres d'opération (44) comportant au moins un ordre d'opération du type d'opération déplacement et au moins un ordre d'opération du type d'opération libération de saisie,
- une liste de positions (46) comportant des informations relatives à l'enregistrement de la position d'opération de l'organe d'opération (32) exécuté au moment d'un processus d'alimentation vers avant, et
- une liste de types d'opération (45) définie comme une paire constituée d'un type d'opération à un moment du processus d'alimentation vers l'avant et d'un type d'opération à un moment d'un processus d'alimentation en sens inverse, dans lequel la liste de types d'opération (45) comprend les paires suivantes :
• le type d'opération à un moment du processus d'alimentation vers l'avant qui est un déplacement vers une position cible et le type d'opération à un moment du processus d'alimentation en sens inverse qui est un déplacement vers une position cible précédente,
• le type d'opération à un moment du processus d'alimentation vers l'avant qui est une saisie et le type d'opération à un moment du processus d'alimentation en sens inverse qui est une libération de saisie, et
• le type d'opération à un moment du processus d'alimentation vers l'avant qui est une libération de saisie et le type d'opération à un moment du processus d'alimentation en sens inverse qui indique une non-exécution ; et
une section de commande (41) configurée pour :
- commander la section d'exécution d'opération au moment du processus d'alimentation vers l'avant pour exécuter le type d'opération pour le processus d'alimentation vers l'avant dans la liste de types d'opération (45) dans l'ordre de traitement, et
- commander la section d'exécution d'opération au moment du processus d'alimentation en sens inverse, sur la base de la liste de positions lorsque démarre une opération de la section d'exécution d'opération, de manière à exécuter le type d'opération pour le processus d'alimentation en sens inverse dans la liste de types d'opération dans un ordre inversé dudit ordre de traitement.

2. Dispositif d'opération sur pièce à usiner selon la revendication 1, dans lequel
la section de commande est configurée pour amener la section de mémoire
- à mémoriser la position d'opération de la section d'exécution d'opération, en cours d'exécution au moment du processus d'alimentation vers l'avant, en tant qu'informations de position d'opération (47) à partir d'une position de démarrage d'enregistrement comprise dans la liste de positions,
- à supprimer les informations de position d'opération lorsqu'est atteinte une position finale d'enregistrement comprise dans la liste de positions, et
la section de commande est en outre configurée pour commander la section d'exécution d'opération afin d'exécuter le processus d'alimentation en sens inverse à partir de la position d'opération comprise dans les informations de position d'opération si les informations de position d'opération sont mémorisées lorsque l'opération de la section d'exécution d'opération démarre.

3. Dispositif d'opération sur pièce à usiner selon l'une quelconque des revendications 1 à 2, dans lequel
la section de commande est configurée pour commander la section d'exécution d'opération afin d'exécuter le processus d'alimentation en sens inverse lorsque la section d'exécution d'opération effectue une opération de retour après avoir été arrêtée en raison d'une erreur.

4. Dispositif d'opération sur pièce à usiner selon l'une quelconque des revendications 1 à 3, dans lequel
l'organe d'opération est un organe de saisie (32) configuré pour effectuer un processus de saisie de la pièce à usiner,
dans lequel la section d'exécution d'opération est une section de saisie et déplacement configurée pour avoir l'organe de saisie et pour déplacer la pièce à usiner, et
dans lequel la section de mémoire est configurée pour stocker la liste de types d'opération qui est définie en incorporant une ou plusieurs d'une paire d'opération de saisie et d'opération de libération de saisie de la pièce à usiner, et d'une paire d'une opération de déplacement de la pièce à usiner vers une position cible de déplacement et d'une opération de déplacement vers la position cible de déplacement pour un type d'opération précédent.

5. Système d'opération sur pièce à usiner (10) comprenant de multiples dispositifs d'opération sur pièce à usiner (20) selon les revendications 1 à 4.

6. Procédé de commande utilisé dans un dispositif d'opération sur pièce à usiner (20), comprenant les étapes consistant à :
acquérir auprès d'une section de mémoire (43) :
- une liste d'ordres d'opération (44), comportant des ordres d'opération, chaque ordre d'opération comprenant un ordre de traitement, un type d'opération qui est l'un parmi un déplacement, une saisie et une libération de saisie, et une position d'opération de l'organe d'opération (32), la liste d'ordres d'opération (44) comportant au moins un ordre d'opération du type d'opération déplacement et au moins un ordre d'opération du type d'opération libération de saisie,
- une liste de positions (46) comportant des informations relatives à l'enregistrement d'une position d'opération d'un organe d'opération exécuté au moment d'un processus d'alimentation vers avant, et
- une liste de types d'opération (45) définie comme une paire constituée d'un type d'opération à un moment du processus d'alimentation vers l'avant et d'un type d'opération à un moment d'un processus d'alimentation en sens inverse, dans lequel la liste de types d'opération (45) comprend les paires suivantes :
• le type d'opération à un moment du processus d'alimentation vers l'avant qui est un déplacement vers une position cible et le type d'opération à un moment du processus d'alimentation en sens inverse qui est un déplacement vers une position cible précédente,
• le type d'opération à un moment du processus d'alimentation vers l'avant qui est une saisie et le type d'opération à un moment du processus d'alimentation en sens inverse qui est une libération de saisie, et
• le type d'opération à un moment du processus d'alimentation vers l'avant qui est une libération de saisie et le type d'opération à un moment du processus d'alimentation en sens inverse qui indique une non-exécution ; et
commander (S130) une section d'exécution d'opération du dispositif d'opération sur pièce à usiner au moment du processus d'alimentation vers l'avant pour exécuter le type d'opération pour le processus d'alimentation vers l'avant dans la liste de types d'opération (45) dans l'ordre de traitement, et
commander (S160) la section d'exécution d'opération du dispositif d'opération sur pièce à usiner au moment du processus d'alimentation en sens inverse, sur la base de la liste de positions lorsque démarre une opération de la section d'exécution d'opération, de manière à exécuter le type d'opération pour le processus d'alimentation en sens inverse dans la liste de types d'opération dans un ordre inversé dudit ordre de traitement.
